# DEMANDE DE BREVET EUROPEEN

(11) **EP 3 241 877 A1**
(43) Date de publication de la demande: **08.11.2017**
(21) Numéro de dépôt: 17164911.4
(22) Date de dépôt: 28.02.2011
(51) Int. Cl.: C09K 5/04

(54) **FLUIDE DE TRANSFERT DE CHALEUR POUR COMPRESSEUR CENTRIFUGE**

(30) Priorité: 02.03.2010 FR 1051503
(62) Demande divisionnaire de: 11712931.2
(71) Demandeur: Arkema France, 92700 Colombes (FR)
(72) Inventeur: RACHED, Wissam, 69630 Chaponost (FR)
(74) Mandataire: Dang, Doris

(57) **Abrégé**

L'invention concerne un procédé de refroidissement ou de chauffage d'un fluide ou d'un corps au moyen d'un circuit de compression de vapeur comportant un compresseur centrifuge et contenant un fluide de transfert de chaleur, le fluide de transfert de chaleur comprenant au moins deux composés choisis parmi le 2,3,3,3-tétrafluoropropène, le 1,3,3,3-tétrafluoropropène, le 1,1,1,2-tétrafluoroéthane, le 1,1-difluoroéthane et le 3,3,3-trifluoropropène, dans lequel :
- le rapport du nombre de Mach du compresseur centrifuge sur le nombre de Mach qu'a le compresseur centrifuge dans les mêmes conditions de fonctionnement si le fluide de transfert de chaleur est remplacé par du 1,1,1,2-tétrafluoroéthane dans le circuit de compression de vapeur est supérieur ou égal à 0,97 et inférieur ou égal à 1,03 ;
- le taux de compression du compresseur centrifuge est inférieur ou égal au taux de compression qu'a le compresseur centrifuge dans les mêmes conditions de fonctionnement si le fluide de transfert de chaleur est remplacé par du 1,1,1,2-tétrafluoroéthane dans le circuit de compression de vapeur.

L'invention concerne également une installation adaptée à la mise en oeuvre de ce procédé de refroidissement ou de chauffage, ainsi qu'un procédé de conversion d'une installation existante.

## Description

### DOMAINE DE L'INVENTION

La présente invention concerne des fluides de transfert de chaleur adaptés à une utilisation dans des systèmes de compression de vapeur comprenant un compresseur centrifuge, en particulier en remplacement du 1,1,1,2-tétrafluoroéthane (HFC-134a).

### ARRIERE-PLAN TECHNIQUE

Les fluides à base de composés fluorocarbonés sont largement utilisés dans de nombreux dispositifs industriels, notamment de climatisation, de pompe à chaleur ou de réfrigération. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

L'étape de compression est effectuée au moyen d'un compresseur, qui peut être notamment un compresseur centrifuge.

Le choix d'un fluide de transfert de chaleur (qui peut être un composé pur ou un mélange de composés) est dicté d'une part par les propriétés thermodynamiques du fluide, et d'autre part par des contraintes supplémentaires, et notamment environnementales.

C'est ainsi que les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures.

En particulier, de nombreux systèmes de climatisation fonctionnent actuellement avec du HFC-134a en tant que fluide de transfert de chaleur. Toutefois, le HFC-134a présente un potentiel de réchauffement climatique (GWP) qui est trop élevé. Il est donc souhaitable de remplacer le HFC-134a par un autre fluide de transfert de chaleur présentant un GWP moins élevé.

Toutefois, toute modification du fluide de transfert de chaleur peut poser des problèmes d'adaptation du système du cycle de compression de vapeur. En particulier, lorsque le cycle utilise un compresseur centrifuge, le remplacement du fluide de transfert de chaleur peut nécessiter un changement du compresseur centrifuge lui-même ou à tout le moins une modification des paramètres de fonctionnement du compresseur de nature à dégrader l'efficacité du système ou à accélérer les phénomènes d'usure.

Les documents WO 97/17414 et US 6,991,743 proposent le remplacement du dichlorodifluorométhane (CFC-12) par des compositions comprenant du HFC-134a dans les cycles comprenant un compresseur centrifuge. Le choix des compositions de remplacement est effectué principalement en fonction du poids moléculaire. Toutefois le poids moléculaire ne présente en réalité pas une fonction prédictive suffisante du comportement des différents fluides de transfert de chaleur.

Le document US 5,076,064 propose le remplacement du trichlorofluorométhane (CFC-11) par des compositions comprenant notamment du 1,1-dichloro-2,2,2-trifluoroéthane (CFC-123) dans les cycles comprenant un compresseur centrifuge. Le choix des compositions de remplacement est effectué principalement en fonction du nombre de Mach.

Les documents WO 2005/108522 et WO 2007/126414 divulguent des mélanges de fluorooléfines et d'autres composés de transfert de chaleur en tant que fluides de transfert de chaleur. Toutefois, ces documents n'identifient aucune composition spécifiquement adaptée à un système de compression de vapeur comprenant un compresseur centrifuge.

Le document WO 2007/053697 décrit également des compositions à base de fluorooléfines destinées à être utilisées en tant que fluides de transfert de chaleur. L'exemple 7 décrit des composés adaptés à remplacer le 1,2,2-trichlorofluoroéthane (CFC-113) dans les cycles pourvus d'un compresseur centrifuge. Le choix des composés est basé sur un calcul de vitesse de rotation théorique des pales du compresseur. Les approximations utilisées dans ce calcul sont toutefois réservées aux fluides relativement lourds.

Le document WO 2009/018117 décrit des mélanges de fluorooléfines et d'autres composés de transfert de chaleur en tant que fluides de transfert de chaleur, notamment en remplacement du HFC-134a. Toutefois, ce document n'identifie aucune composition spécifiquement adaptée à un système de compression de vapeur comprenant un compresseur centrifuge.

Le document WO 2009/151669 décrit diverses compositions de transfert de chaleur à base de fluorooléfines et de lubrifiants spécifiques.

Aucun des documents de l'état de la technique ne propose de fluide de transfert de chaleur en remplacement du HFC-134a dans un système de compression de vapeur comprenant un compresseur centrifuge, qui à la fois présente un GWP inférieur à celui du HFC-134a et garantisse le maintien voire une amélioration des performances du compresseur centrifuge par rapport au HFC-134a.

Il existe donc un réel besoin de mettre au point un tel fluide de transfert de chaleur.

### RESUME DE L'INVENTION

L'invention concerne en premier lieu un procédé de refroidissement ou de chauffage d'un fluide ou d'un corps au moyen d'un circuit de compression de vapeur comportant un compresseur centrifuge et contenant un fluide de transfert de chaleur, le fluide de transfert de chaleur comprenant au moins deux composés choisis parmi le 2,3,3,3-tétrafluoropropène, le 1,3,3,3-tétrafluoropropène, le 1,1,1,2-tétrafluoroéthane, le 1,1-difluoroéthane et le 3,3,3-trifluoropropène, dans lequel :
- le rapport du nombre de Mach du compresseur centrifuge sur le nombre de Mach qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur, est supérieur ou égal à 0,97 et inférieur ou égal à 1,03 ;
- le taux de compression du compresseur centrifuge est inférieur ou égal au taux de compression qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur.

L'invention concerne par ailleurs une installation de refroidissement ou de chauffage d'un fluide ou d'un corps, pour la mise en oeuvre du procédé ci-dessus, comprenant un circuit de compression de vapeur comportant un compresseur centrifuge et contenant un fluide de transfert de chaleur, le fluide de transfert de chaleur comprenant au moins deux composés choisis parmi le 2,3,3,3-tétrafluoropropène, le 1,3,3,3-tétrafluoropropène, le 1,1,1,2-tétrafluoroéthane, le 1,1-difluoroéthane et le 3,3,3-trifluoropropène (et leurs mélanges), dans laquelle :
- le rapport du nombre de Mach du compresseur centrifuge sur le nombre de Mach qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur, est supérieur ou égal à 0,97 et inférieur ou égal à 1,03 ;
- le taux de compression du compresseur centrifuge est inférieur ou égal au taux de compression qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur.

L'invention concerne par ailleurs un procédé de conversion d'un circuit de compression de vapeur, qui consiste à remplacer un fluide de transfert de chaleur existant par le fluide de chaleur ci-dessus. Ce procédé comprend :
- la fourniture d'un circuit initial de compression de vapeur comportant un compresseur centrifuge et contenant du 1,1,1,2-tétrafluoroéthane en tant que fluide de transfert de chaleur ; et
- le remplacement du 1,1,1,2-tétrafluoréthane par un fluide de transfert de chaleur de remplacement pour fournir un circuit final de compression de vapeur ;
dans lequel le fluide de transfert de chaleur de remplacement comprend au moins deux composés choisis parmi le 2,3,3,3-tétrafluoropropène, le 1,3,3,3-tétrafluoropropène, le 1,1,1,2-tétrafluoroéthane, le 1,1-difluoroéthane et le 3,3,3-trifluoropropène (et leurs mélanges), et dans lequel :
- le rapport du nombre de Mach du compresseur centrifuge dans le circuit final de compression de vapeur sur le nombre de Mach du compresseur centrifuge dans le circuit initial de compression de vapeur, dans les mêmes conditions de fonctionnement, est supérieur ou égal à 0,97 et inférieur ou égal à 1,03 ; et
- le taux de compression du compresseur centrifuge dans le circuit final de compression de vapeur est inférieur ou égal au taux de compression du compresseur centrifuge dans le circuit initial de compression de vapeur dans les mêmes conditions de fonctionnement.

Selon un mode de réalisation du procédé de refroidissement ou de chauffage, de l'installation de refroidissement ou de chauffage et du procédé de conversion d'un circuit de compression de vapeur ci-dessus, le fluide de transfert de chaleur (le cas échéant, de remplacement), comprend, de préférence consiste en, un mélange :
- de 2,3,3,3-tétrafluoropropène et de 1,1,1,2-tétrafluoroéthane ; ou
- de 2,3,3,3-tétrafluoropropène et de 1,1-difluoroéthane ; ou
- de 2,3,3,3-tétrafluoropropène et de 3,3,3-trifluoropropène ; ou
- de 1,3,3,3-tétrafluoropropène et de 3,3,3-trifluoropropène ; ou
- de 1,1,1,2-tétrafluoroéthane et de 3,3,3-trifluoropropène ; ou
- de 2,3,3,3-tétrafluoropropène, de 1,3,3,3-tétrafluoropropène et de 1,1-difluoroéthane ;
- de 2,3,3,3-tétrafluoropropène, de 1,1,1,2-tétrafluoroéthane et de 1,1-difluoroéthane ; ou
- de 2,3,3,3-tétrafluoropropène, de 1,1,1,2-tétrafluoroéthane et de 3,3,3-trifluoropropène ; ou
- de 2,3,3,3-tétrafluoropropène, de 1,1-difluoroéthane et de 3,3,3-trifluoropropène ; ou
- de 1,3,3,3-tétrafluoropropène, de 1,1,1,2-tétrafluoroéthane et de 1,1-difluoroéthane ; ou
- de 1,3,3,3-tétrafluoropropène, de 1,1-difluoroéthane et de 3,3,3-trifluoropropène.

Selon un autre mode de réalisation du procédé de refroidissement ou de chauffage et de l'installation de refroidissement ou de chauffage ci-dessus, le circuit de compression de vapeur comprend un évaporateur et un condenseur, et :
- la différence entre la pression au condenseur et la pression à l'évaporateur est inférieure ou égale à la différence entre la pression au condenseur et la pression à l'évaporateur qui est obtenue, dans les mêmes conditions de fonctionnement, lorsque le fluide de transfert de chaleur est remplacé par du 1,1,1,2-tétrafluoroéthane dans le circuit de compression de vapeur.

Selon un mode de réalisation du procédé de conversion d'un circuit de compression de vapeur ci-dessus, le circuit (initial ou final) de compression de vapeur comprend un évaporateur et un condenseur, et :
- la différence entre la pression au condenseur et la pression à l'évaporateur dans le circuit final de compression de vapeur est inférieure ou égale à la différence entre la pression au condenseur et la pression à l'évaporateur dans le circuit initial de compression de vapeur, dans les mêmes conditions de fonctionnement.

Selon une première variante du procédé de refroidissement ou de chauffage, ou de l'installation de refroidissement ou de chauffage ci-dessus, le compresseur centrifuge est pourvu de moyens d'adaptation de vitesse de rotation, et :
- la vitesse de rotation du compresseur centrifuge est inférieure ou égale à la vitesse de rotation qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur.

Selon une première variante du procédé de conversion d'un circuit de compression de vapeur ci-dessus, le compresseur centrifuge est pourvu de moyens d'adaptation de vitesse de rotation, et :
- la vitesse de rotation du compresseur centrifuge dans le circuit final de compression de vapeur est réglée à une valeur inférieure ou égale à la vitesse de rotation du compresseur centrifuge dans le circuit initial de compression de vapeur dans les mêmes conditions de fonctionnement.

Selon la première variante des procédés et de l'installation ci-dessus (variante de la vitesse variable), le fluide de transfert de chaleur comprend de préférence :
- de 2 % à 50 % de 2,3,3,3-tétrafluoropropène et de 50 % à 98 % de 1,1,1,2-tétrafluoroéthane, de préférence de 5 % à 40 % de 2,3,3,3-tétrafluoropropène et de 60 % à 95 % de 1,1,1,2-tétrafluoroéthane, et de manière plus particulièrement préférée de 5 % à 30 % de 2,3,3,3-tétrafluoropropène et de 70 % à 95 % de 1,1,1,2-tétrafluoroéthane ; ou
- de 50 % à 95 % de 2,3,3,3-tétrafluoropropène et de 5 % à 50 % de 1,1-difluoroéthane, de préférence de 60 % à 95 % de 2,3,3,3-tétrafluoropropène et de 5 % à 40 % de 1,1-difluoroéthane, et de manière plus particulièrement préférée de 85 % à 90 % de 2,3,3,3-tétrafluoropropène et de 10 % à 15 % de 1,1-difluoroéthane ; ou
- de 10 % à 70 % de 2,3,3,3-tétrafluoropropène et de 30 % à 90 % de 3,3,3-trifluoropropène, de préférence de 20 % à 60 % de 2,3,3,3-tétrafluoropropène et de 40 % à 80 % de 3,3,3-trifluoropropène, et de manière plus particulièrement préférée de 40 % à 50 % de 2,3,3,3-tétrafluoropropène et de 50 % à 60 % de 3,3,3-trifluoropropène ; ou
- de 20 % à 70 % de 1,3,3,3-tétrafluoropropène et de 30 % à 80 % de 3,3,3-trifluoropropène, de préférence de 30 % à 60 % de 1,3,3,3-tétrafluoropropène et de 40 % à 70 % de 3,3,3-trifluoropropène, et de manière plus particulièrement préférée de 30 % à 50 % de 1,3,3,3-tétrafluoropropène et de 50 % à 70 % de 3,3,3-trifluoropropène ; ou
- de 10 % à 70 % de 1,1,1,2-tétrafluoroéthane et de 30 % à 90 % de 3,3,3-trifluoropropène, de préférence de 20 % à 60 % de 1,1,1,2-tétrafluoroéthane et de 40 % à 80 % de 3,3,3-trifluoropropène, et de manière plus particulièrement préférée de 35 % à 50 % de 1,1,1,2-tétrafluoroéthane et de 55 % à 65 % de 3,3,3-trifluoropropène ; ou
- de 10 % à 90 % de 2,3,3,3-tétrafluoropropène, de 5 % à 70 % de 1,3,3,3-tétrafluoropropène et de 5 % à 30 % de 1,1-difluoroéthane, de préférence de 20 % à 85 % de 2,3,3,3-tétrafluoropropène, de 5 % à 60 % de 1,3,3,3-tétrafluoropropène et de 10 % à 20 % de 1,1-difluoroéthane, et de manière plus particulièrement préférée de 30 % à 85 % de 2,3,3,3-tétrafluoropropène, de 5 % à 50 % de 1,3,3,3-tétrafluoropropène et de 10 % à 15 % de 1,1-difluoroéthane ; ou
- de 10 % à 93 % de 2,3,3,3-tétrafluoropropène, de 5 % à 80 % de 1,1,1,2-tétrafluoroéthane et de 2 % à 50 % de 1,1-difluoroéthane, de préférence de 13 % à 93 % de 2,3,3,3-tétrafluoropropène, de 5 % à 60 % de 1,1,1,2-tétrafluoroéthane et de 2 % à 30 % de 1,1-difluoroéthane, et de manière plus particulièrement préférée de 25 % à 92 % de 2,3,3,3-tétrafluoropropène, de 5 % à 60 % de 1,1,1,2-tétrafluoroéthane et de 3 % à 15 % de 1,1-difluoroéthane ; ou
- de 5 % à 90 % de 2,3,3,3-tétrafluoropropène, de 5 % à 60 % de 1,1,1,2-tétrafluoroéthane et de 5 % à 70 % de 3,3,3-trifluoropropène, de préférence de 10 % à 85 % de 2,3,3,3-tétrafluoropropène, de 5 % à 60 % de 1,1,1,2-tétrafluoroéthane et de 10 % à 70 % de 3,3,3-trifluoropropène, et de manière plus particulièrement préférée de 10 % à 60 % de 2,3,3,3-tétrafluoropropène, de 5 % à 50 % de 1,1,1,2-tétrafluoroéthane et de 20 % à 60 % de 3,3,3-trifluoropropène ; ou
- de 10 % à 89 % de 2,3,3,3-tétrafluoropropène, de 3 % à 20 % de 1,1-difluoroéthane et de 8 % à 70 % de 3,3,3-trifluoropropène, de préférence de 35 % à 89 % de 2,3,3,3-tétrafluoropropène, de 3 % à 15 % de 1,1-difluoroéthane et de 8 % à 50 % de 3,3,3-trifluoropropène, et de manière plus particulièrement préférée de 50 % à 85 % de 2,3,3,3-tétrafluoropropène, de 5 % à 10 % de 1,1-difluoroéthane et de 10 % à 40 % de 3,3,3-trifluoropropène ; ou
- de 10 % à 60 % de 1,3,3,3-tétrafluoropropène, de 20 % à 87 % de 1,1,1,2-tétrafluoroéthane et de 3 % à 20 % de 1,1-difluoroéthane, de préférence de 10 % à 40 % de 1,3,3,3-tétrafluoropropène, de 45 % à 87 % de 1,1,1,2-tétrafluoroéthane et de 3 % à 15 % de 1,1-difluoroéthane, et de manière plus particulièrement préférée de 10 % à 30 % de 1,3,3,3-tétrafluoropropène, de 60 % à 85 % de 1,1,1,2-tétrafluoroéthane et de 5 % à 10 % de 1,1-difluoroéthane ; ou
- de 25 % à 82 % de 1,3,3,3-tétrafluoropropène, de 3 % à 15 % de 1,1-difluoroéthane et de 15 % à 60 % de 3,3,3-trifluoropropène, de préférence de 35 % à 82 % de 1,3,3,3-tétrafluoropropène, de 3 % à 15 % de 1,1-difluoroéthane et de 15 % à 50 % de 3,3,3-trifluoropropène, et de manière plus particulièrement préférée de 40 % à 75 % de 1,3,3,3-tétrafluoropropène, de 5 % à 10 % de 1,1-difluoroéthane et de 20 % à 50 % de 3,3,3-trifluoropropène.

Selon une deuxième variante du procédé de refroidissement ou de chauffage, de l'installation de refroidissement ou de chauffage et du procédé de conversion d'un circuit de compression de vapeur ci-dessus, le compresseur centrifuge est dépourvu de moyens d'adaptation de vitesse de rotation.

Selon cette deuxième variante des procédés et de l'installation ci-dessus (variante de la vitesse constante), le fluide de transfert de chaleur comprend de préférence :
- de 2 % à 50 % de 2,3,3,3-tétrafluoropropène et de 50 % à 98 % de 1,1,1,2-tétrafluoroéthane, de préférence de 2 % à 30 % de 2,3,3,3-tétrafluoropropène et de 70 % à 98 % de 1,1,1,2-tétrafluoroéthane, et de manière plus particulièrement préférée de 5 % à 15 % de 2,3,3,3-tétrafluoropropène et de 85 % à 95 % de 1,1,1,2-tétrafluoroéthane ; ou
- de 50 % à 90 % de 2,3,3,3-tétrafluoropropène et de 10 % à 50 % de 1,1-difluoroéthane, de préférence de 60 % à 90 % de 2,3,3,3-tétrafluoropropène et de 10 % à 40 % de 1,1-difluoroéthane, et de manière plus particulièrement préférée de 70 % à 80 % de 2,3,3,3-tétrafluoropropène et de 20 % à 30 % de 1,1-difluoroéthane ; ou
- de 10 % à 40 % de 2,3,3,3-tétrafluoropropène et de 60 % à 90 % de 3,3,3-trifluoropropène, de préférence de 10 % à 30 % de 2,3,3,3-tétrafluoropropène et de 70 % à 90 % de 3,3,3-trifluoropropène, et de manière plus particulièrement préférée de 10 % à 20 % de 2,3,3,3-tétrafluoropropène et de 80 % à 90 % de 3,3,3-trifluoropropène ; ou
- de 20 % à 70 % de 1,3,3,3-tétrafluoropropène et de 30 % à 80 % de 3,3,3-trifluoropropène, de préférence de 20 % à 60 % de 1,3,3,3-tétrafluoropropène et de 40 % à 70 % de 3,3,3-trifluoropropène, et de manière plus particulièrement préférée de 30 % à 50 % de 1,3,3,3-tétrafluoropropène et de 50 % à 70 % de 3,3,3-trifluoropropène ; ou
- de 10 % à 70 % de 1,1,1,2-tétrafluoroéthane et de 30 % à 90 % de 3,3,3-trifluoropropène, de préférence de 20 % à 60 % de 1,1,1,2-tétrafluoroéthane et de 40 % à 80 % de 3,3,3-trifluoropropène, et de manière plus particulièrement préférée de 35 % à 50 % de 1,1,1,2-tétrafluoroéthane et de 50 % à 65 % de 3,3,3-trifluoropropène ; ou
- de 15 % à 85 % de 2,3,3,3-tétrafluoropropène, de 5 % à 60 % de 1,3,3,3-tétrafluoropropène et de 5 % à 30 % de 1,1-difluoroéthane, de préférence de 20 % à 85 % de 2,3,3,3-tétrafluoropropène, de 5 % à 50 % de 1,3,3,3-tétrafluoropropène et de 10 % à 30 % de 1,1-difluoroéthane, et de manière plus particulièrement préférée de 35 % à 80 % de 2,3,3,3-tétrafluoropropène, de 5 % à 40 % de 1,3,3,3-tétrafluoropropène et de 15 % à 25 % de 1,1-difluoroéthane ; ou
- de 18 % à 93 % de 2,3,3,3-tétrafluoropropène, de 5 % à 80 % de 1,1,1,2-tétrafluoroéthane et de 2 % à 50 % de 1,1-difluoroéthane, de préférence de 20 % à 93 % de 2,3,3,3-tétrafluoropropène, de 5 % à 60 % de 1,1,1,2-tétrafluoroéthane et de 2 % à 30 % de 1,1-difluoroéthane, et de manière plus particulièrement préférée de 30 % à 88 % de 2,3,3,3-tétrafluoropropène, de 5 % à 60 % de 1,1,1,2-tétrafluoroéthane et de 7 % à 20 % de 1,1-difluoroéthane ; ou
- de 10 % à 80 % de 2,3,3,3-tétrafluoropropène, de 5 % à 60 % de 1,1,1,2-tétrafluoroéthane et de 15 % à 80 % de 3,3,3-trifluoropropène, de préférence de 10 % à 75 % de 2,3,3,3-tétrafluoropropène, de 5 % à 60 % de 1,1,1,2-tétrafluoroéthane et de 20 % à 80 % de 3,3,3-trifluoropropène, et de manière plus particulièrement préférée de 10 % à 65 % de 2,3,3,3-tétrafluoropropène, de 5 % à 50 % de 1,1,1,2-tétrafluoroéthane et de 30 % à 80 % de 3,3,3-trifluoropropène ; ou
- de 10 % à 78 % de 2,3,3,3-tétrafluoropropène, de 3 % à 15 % de 1,1-difluoroéthane et de 20 % à 70 % de 3,3,3-trifluoropropène, de préférence de 15 % à 67 % de 2,3,3,3-tétrafluoropropène, de 3 % à 10 % de 1,1-difluoroéthane et de 30 % à 70 % de 3,3,3-trifluoropropène, et de manière plus particulièrement préférée de 21 % à 57 % de 2,3,3,3-tétrafluoropropène, de 3 % à 9 % de 1,1-difluoroéthane et de 40 % à 70 % de 3,3,3-trifluoropropène ; ou
- de 15 % à 60 % de 1,3,3,3-tétrafluoropropène, de 20 % à 82 % de 1,1,1,2-tétrafluoroéthane et de 3 % à 20 % de 1,1-difluoroéthane, de préférence de 15 % à 50 % de 1,3,3,3-tétrafluoropropène, de 35 % à 82 % de 1,1,1,2-tétrafluoroéthane et de 3 % à 15 % de 1,1-difluoroéthane, et de manière plus particulièrement préférée de 20 % à 30 % de 1,3,3,3-tétrafluoropropène, de 60 % à 75 % de 1,1,1,2-tétrafluoroéthane et de 5 % à 10 % de 1,1-difluoroéthane ; ou
- de 35 % à 77 % de 1,3,3,3-tétrafluoropropène, de 3 % à 15 % de 1,1-difluoroéthane et de 20 % à 50 % de 3,3,3-trifluoropropène, de préférence de 35 % à 72 % de 1,3,3,3-tétrafluoropropène, de 3 % à 15 % de 1,1-difluoroéthane et de 25 % à 50 % de 3,3,3-trifluoropropène, et de manière plus particulièrement préférée de 40 % à 66 % de 1,3,3,3-tétrafluoropropène, de 4 % à 10 % de 1,1-difluoroéthane et de 30 % à 50 % de 3,3,3-trifluoropropène.

L'invention a plus particulièrement pour objet :
- un procédé de refroidissement ou de chauffage d'un fluide ou d'un corps au moyen d'un circuit de compression de vapeur comportant un compresseur centrifuge et contenant un fluide de transfert de chaleur ;
- une installation de refroidissement ou de chauffage d'un fluide ou d'un corps comprenant un circuit de compression de vapeur comportant un compresseur centrifuge et contenant un fluide de transfert de chaleur ; et
- un procédé de conversion d'un circuit de compression de vapeur comprenant la fourniture d'un circuit initial de compression de vapeur comportant un compresseur centrifuge et contenant du 1,1,1,2-tétrafluoroéthane en tant que fluide de transfert de chaleur, et le remplacement du 1,1,1,2-tétrafluoréthane par un fluide de transfert de chaleur de remplacement pour fournir un circuit final de compression de vapeur ;
dans lesquels le fluide de transfert de chaleur (c'est-à-dire le fluide de transfert de chaleur de remplacement, dans le cas du procédé de conversion) comprend, et de préférence consiste en :
- de 2 % à 50 % de 2,3,3,3-tétrafluoropropène et de 50 % à 98 % de 1,1,1,2-tétrafluoroéthane ; ou
- de 50 % à 95 % de 2,3,3,3-tétrafluoropropène et de 5 % à 50 % de 1,1-difluoroéthane ; ou
- de 10 % à 70 % de 2,3,3,3-tétrafluoropropène et de 30 % à 90 % de 3,3,3-trifluoropropène ; ou
- de 20 % à 70 % de 1,3,3,3-tétrafluoropropène et de 30 % à 80 % de 3,3,3-trifluoropropène ; ou
- de 10 % à 70 % de 1,1,1,2-tétrafluoroéthane et de 30 % à 90 % de 3,3,3-trifluoropropène ; ou
- de 10 % à 90 % de 2,3,3,3-tétrafluoropropène, de 5 % à 70 % de 1,3,3,3-tétrafluoropropène et de 5 % à 30 % de 1,1-difluoroéthane ; ou
- de 10 % à 93 % de 2,3,3,3-tétrafluoropropène, de 5 % à 80 % de 1,1,1,2-tétrafluoroéthane et de 2 % à 50 % de 1,1-difluoroéthane ; ou
- de 5 % à 90 % de 2,3,3,3-tétrafluoropropène, de 5 % à 60 % de 1,1,1,2-tétrafluoroéthane et de 5 % à 80 % de 3,3,3-trifluoropropène ; ou
- de 10 % à 89 % de 2,3,3,3-tétrafluoropropène, de 3 % à 20 % de 1,1-difluoroéthane et de 8 % à 70 % de 3,3,3-trifluoropropène ; ou
- de 10 % à 60 % de 1,3,3,3-tétrafluoropropène, de 20 % à 87 % de 1,1,1,2-tétrafluoroéthane et de 3 % à 20 % de 1,1-difluoroéthane ; ou
- de 25 % à 82 % de 1,3,3,3-tétrafluoropropène, de 3 % à 15 % de 1,1-difluoroéthane et de 15 % à 60 % de 3,3,3-trifluoropropène.

Selon un mode de réalisation de cette invention plus particulière, le fluide de transfert de chaleur comprend :
- de 2 % à 30 % de 2,3,3,3-tétrafluoropropène et de 70 % à 98 % de 1,1,1,2-tétrafluoroéthane, de préférence de 5 % à 15 % de 2,3,3,3-tétrafluoropropène et de 85 % à 95 % de 1,1,1,2-tétrafluoroéthane ; ou
- de 5 % à 40 % de 2,3,3,3-tétrafluoropropène et de 60 % à 95 % de 1,1,1,2-tétrafluoroéthane de préférence de 5 % à 30 % de 2,3,3,3-tétrafluoropropène et de 70 % à 95 % de 1,1,1,2-tétrafluoroéthane ; ou
- de 60 % à 90 % de 2,3,3,3-tétrafluoropropène et de 10 % à 40 % de 1,1-difluoroéthane, de préférence de 70 % à 80 % de 2,3,3,3-tétrafluoropropène et de 20 % à 30 % de 1,1-difluoroéthane ; ou
- de 60 % à 95 % de 2,3,3,3-tétrafluoropropène et de 5 % à 40 % de 1,1-difluoroéthane, de préférence de 85 % à 90 % de 2,3,3,3-tétrafluoropropène et de 10 % à 15 % de 1,1-difluoroéthane ; ou
- de 10 % à 30 % de 2,3,3,3-tétrafluoropropène et de 70 % à 90 % de 3,3,3-trifluoropropène, de préférence de 10 % à 20 % de 2,3,3,3-tétrafluoropropène et de 80 % à 90 % de 3,3,3-trifluoropropène ; ou
- de 20 % à 60 % de 2,3,3,3-tétrafluoropropène et de 40 % à 80 % de 3,3,3-trifluoropropène, de préférence de 40 % à 50 % de 2,3,3,3-tétrafluoropropène et de 50 % à 60 % de 3,3,3-trifluoropropène ; ou
- de 30 % à 60 % de 1,3,3,3-tétrafluoropropène et de 40 % à 70 % de 3,3,3-trifluoropropène, de préférence de 30 % à 50 % de 1,3,3,3-tétrafluoropropène et de 50 % à 70 % de 3,3,3-trifluoropropène ; ou
- de 20 % à 60 % de 1,1,1,2-tétrafluoroéthane et de 40 % à 80 % de 3,3,3-trifluoropropène, de préférence de 35 % à 50 % de 1,1,1,2-tétrafluoroéthane et de 50 % à 65 % de 3,3,3-trifluoropropène ; ou
- de 20 % à 85 % de 2,3,3,3-tétrafluoropropène, de 5 % à 50 % de 1,3,3,3-tétrafluoropropène et de 10 % à 30 % de 1,1-difluoroéthane, de préférence de 35 % à 80 % de 2,3,3,3-tétrafluoropropène, de 5 % à 40 % de 1,3,3,3-tétrafluoropropène et de 15 % à 25 % de 1,1-difluoroéthane ; ou
- de 20 % à 85 % de 2,3,3,3-tétrafluoropropène, de 5 % à 60 % de 1,3,3,3-tétrafluoropropène et de 10 % à 20 % de 1,1-difluoroéthane, de préférence de 30 % à 85 % de 2,3,3,3-tétrafluoropropène, de 5 % à 50 % de 1,3,3,3-tétrafluoropropène et de 10 % à 15 % de 1,1-difluoroéthane ; ou
- de 20 % à 93 % de 2,3,3,3-tétrafluoropropène, de 5 % à 60 % de 1,1,1,2-tétrafluoroéthane et de 2 % à 30 % de 1,1-difluoroéthane, de préférence de 30 % à 88 % de 2,3,3,3-tétrafluoropropène, de 5 % à 60 % de 1,1,1,2-tétrafluoroéthane et de 7 % à 20 % de 1,1-difluoroéthane ; ou
- de 13 % à 93 % de 2,3,3,3-tétrafluoropropène, de 5 % à 60 % de 1,1,1,2-tétrafluoroéthane et de 2 % à 30 % de 1,1-difluoroéthane, de préférence de 25 % à 92 % de 2,3,3,3-tétrafluoropropène, de 5 % à 60 % de 1,1,1,2-tétrafluoroéthane et de 3 % à 15 % de 1,1-difluoroéthane ; ou
- de 10 % à 75 % de 2,3,3,3-tétrafluoropropène, de 5 % à 60 % de 1,1,1,2-tétrafluoroéthane et de 20 % à 80 % de 3,3,3-trifluoropropène, de préférence de 10 % à 65 % de 2,3,3,3-tétrafluoropropène, de 5 % à 50 % de 1,1,1,2-tétrafluoroéthane et de 30 % à 80 % de 3,3,3-trifluoropropène ; ou
- de 10 % à 85 % de 2,3,3,3-tétrafluoropropène, de 5 % à 60 % de 1,1,1,2-tétrafluoroéthane et de 10 % à 70 % de 3,3,3-trifluoropropène, de préférence de 10 % à 60 % de 2,3,3,3-tétrafluoropropène, de 5 % à 50 % de 1,1,1,2-tétrafluoroéthane et de 20 % à 60 % de 3,3,3-trifluoropropène ; ou
- de 15 % à 67 % de 2,3,3,3-tétrafluoropropène, de 3 % à 10 % de 1,1-difluoroéthane et de 30 % à 70 % de 3,3,3-trifluoropropène, de préférence de 21 % à 57 % de 2,3,3,3-tétrafluoropropène, de 3 % à 9 % de 1,1-difluoroéthane et de 40 % à 70 % de 3,3,3-trifluoropropène ; ou
- de 35 % à 89 % de 2,3,3,3-tétrafluoropropène, de 3 % à 15 % de 1,1-difluoroéthane et de 8 % à 50 % de 3,3,3-trifluoropropène, de préférence de 50 % à 85 % de 2,3,3,3-tétrafluoropropène, de 5 % à 10% de 1,1-difluoroéthane et de 10 % à 40 % de 3,3,3-trifluoropropène ; ou
- de 15 % à 50 % de 1,3,3,3-tétrafluoropropène, de 35 % à 82 % de 1,1,1,2-tétrafluoroéthane et de 3 % à 15 % de 1,1-difluoroéthane, de préférence de 20 % à 30 % de 1,3,3,3-tétrafluoropropène, de 60 % à 75 % de 1,1,1,2-tétrafluoroéthane et de 5 % à 10 % de 1,1-difluoroéthane ; ou
- de 10 % à 40 % de 1,3,3,3-tétrafluoropropène, de 45 % à 87 % de 1,1,1,2-tétrafluoroéthane et de 3 % à 15 % de 1,1-difluoroéthane, de préférence de 10 % à 30 % de 1,3,3,3-tétrafluoropropène, de 60 % à 85 % de 1,1,1,2-tétrafluoroéthane et de 5 % à 10 % de 1,1-difluoroéthane ; ou
- de 35 % à 72 % de 1,3,3,3-tétrafluoropropène, de 3 % à 15 % de 1,1-difluoroéthane et de 25 % à 50 % de 3,3,3-trifluoropropène, de préférence de 40 % à 66 % de 1,3,3,3-tétrafluoropropène, de 4 % à 10 % de 1,1-difluoroéthane et de 30 % à 50 % de 3,3,3-trifluoropropène ; ou
- de 35 % à 82 % de 1,3,3,3-tétrafluoropropène, de 3 % à 15 % de 1,1-difluoroéthane et de 15 % à 50 % de 3,3,3-trifluoropropène, de préférence de 40 % à 75 % de 1,3,3,3-tétrafluoropropène, de 5 % à 10 % de 1,1-difluoroéthane et de 20 % à 50 % de 3,3,3-trifluoropropène.

Selon un mode de réalisation de l'une quelconque des installations ci-dessus, l'installation est une installation de climatisation mobile ou stationnaire, de préférence une installation de climatisation stationnaire.

L'invention a par ailleurs pour objet une composition adaptée à la mise en oeuvre de l'un quelconque des procédés ci-dessus et adaptée à la fabrication de l'une quelconque des installations ci-dessus, comprenant :
- de 10 % à 90 % de 2,3,3,3-tétrafluoropropène, de 5 % à 70 % de 1,3,3,3-tétrafluoropropène et de 5 % à 30 % de 1,1-difluoroéthane ; ou
- de 5 % à 90 % de 2,3,3,3-tétrafluoropropène, de 5 % à 60 % de 1,1,1,2-tétrafluoroéthane et de 5 % à 80 % de 3,3,3-trifluoropropène ; ou
- de 10 % à 89 % de 2,3,3,3-tétrafluoropropène, de 3 % à 20 % de 1,1-difluoroéthane et de 8 % à 70 % de 3,3,3-trifluoropropène.

Selon un mode de réalisation, la composition comprend :
- de 20 % à 85 % de 2,3,3,3-tétrafluoropropène, de 5 % à 50 % de 1,3,3,3-tétrafluoropropène et de 10 % à 30 % de 1,1-difluoroéthane, de préférence de 35 % à 80 % de 2,3,3,3-tétrafluoropropène, de 5 % à 40 % de 1,3,3,3-tétrafluoropropène et de 15 % à 25 % de 1,1-difluoroéthane ; ou
- de 20 % à 85 % de 2,3,3,3-tétrafluoropropène, de 5 % à 60 % de 1,3,3,3-tétrafluoropropène et de 10 % à 20 % de 1,1-difluoroéthane, de préférence de 30 % à 85 % de 2,3,3,3-tétrafluoropropène, de 5 % à 50 % de 1,3,3,3-tétrafluoropropène et de 10 % à 15 % de 1,1-difluoroéthane ; ou

- de 10 % à 75 % de 2,3,3,3-tétrafluoropropène, de 5 % à 60 % de 1,1,1,2-tétrafluoroéthane et de 20 % à 80 % de 3,3,3-trifluoropropène, de préférence de 10 % à 65 % de 2,3,3,3-tétrafluoropropène, de 5 % à 50 % de 1,1,1,2-tétrafluoroéthane et de 30 % à 80 % de 3,3,3-trifluoropropène ; ou
- de 10 % à 85 % de 2,3,3,3-tétrafluoropropène, de 5 % à 60 % de 1,1,1,2-tétrafluoroéthane et de 10 % à 70 % de 3,3,3-trifluoropropène, de préférence de 10 % à 60 % de 2,3,3,3-tétrafluoropropène, de 5 % à 50 % de 1,1,1,2-tétrafluoroéthane et de 20 % à 60 % de 3,3,3-trifluoropropène ; ou
- de 15 % à 67 % de 2,3,3,3-tétrafluoropropène, de 3 % à 10 % de 1,1-difluoroéthane et de 30 % à 70 % de 3,3,3-trifluoropropène, de préférence de 21 % à 57 % de 2,3,3,3-tétrafluoropropène, de 3 % à 9 % de 1,1-difluoroéthane et de 40 % à 70 % de 3,3,3-trifluoropropène ; ou
- de 35 % à 89 % de 2,3,3,3-tétrafluoropropène, de 3 % à 15 % de 1,1-difluoroéthane et de 8 % à 50 % de 3,3,3-trifluoropropène, de préférence de 50 % à 85 % de 2,3,3,3-tétrafluoropropène, de 5 % à 10% de 1,1-difluoroéthane et de 10 % à 40 % de 3,3,3-trifluoropropène.

L'invention a également pour objet une composition de transfert de chaleur, comprenant la composition ci-dessus ainsi qu'un ou plusieurs additifs choisis parmi les lubrifiants, les stabilisants, les tensioactifs, les agents traceurs, les agents fluorescents, les agents odorants et les agents de solubilisation et leurs mélanges.

La présente invention permet de surmonter les inconvénients de l'état de la technique. Elle fournit plus particulièrement des fluides de transfert de chaleur adaptés à remplacer le HFC-134a dans un système de compression de vapeur comprenant un compresseur centrifuge. Les fluides de transfert de chaleur de l'invention présentent un GWP inférieur à celui du HFC-134a tout en garantissant un maintien ou même une amélioration des performances du compresseur centrifuge par rapport au HFC-134a. En particulier, l'invention rend inutile tout changement du compresseur ou de pièces du compresseur.

Cela est accompli grâce à la fourniture de mélanges d'au moins deux composés choisis parmi les cinq composés suivants :
- 2,3,3,3-tétrafluoropropène (HFO-1234yf),
- 1,3,3,3-tétrafluoropropène (HFO-1234ze),
- 1,1,1,2-tétrafluoroéthane (HFC-134a),
- 1,1-difluoroéthane (HFC-152a) et
- 3,3,3-trifluoropropène (HFO-1243zf),
les proportions de ces composés étant choisies de telle sorte que :
1) le nombre de Mach du compresseur centrifuge est quasiment identique à celui du compresseur centrifuge fonctionnant avec du HFC-134a pur, et
2) le taux de compression du compresseur centrifuge est inférieur ou égal à celui du compresseur centrifuge fonctionnant avec du HFC-134a pur.

Cet ajustement des proportions des différents composés en fonction du nombre de Mach et du taux de compression assure un maintien des performances du cycle de compression de vapeur par rapport au fonctionnement avec du HFC-134a pur.

Selon certains modes de réalisation particuliers, l'invention présente également une ou de préférence plusieurs des caractéristiques avantageuses énumérées ci-dessous.
- Les proportions des composés du mélange formant le fluide de transfert de chaleur peuvent être également ajustées de sorte à imposer comme caractéristique supplémentaire que la différence entre la pression au condenseur et la pression à l'évaporateur est moindre (ou égale) lorsque le fluide de transfert de chaleur est le mélange en question, par rapport au cas où le fluide de transfert de chaleur est formé de HFC-134a pur. Cela permet d'améliorer encore le fonctionnement du compresseur centrifuge.
- Certaines compositions proposées par l'invention permettent de faire fonctionner le compresseur centrifuge à la même vitesse que lorsqu'on utilise du HFC-134a pur en tant que fluide de transfert de chaleur, les autres paramètres d'opération étant identiques. Ces compositions sont particulièrement utiles lorsque le compresseur centrifuge ne comporte pas de moyens d'adaptation de la vitesse, car elles évitent d'avoir à changer le compresseur centrifuge ou des pièces de celui-ci.
- Certaines compositions proposées par l'invention permettent de faire fonctionner le compresseur centrifuge à une vitesse inférieure à celle obtenue lorsqu'on utilise du HFC-134a pur en tant que fluide de transfert de chaleur, les autres paramètres d'opération étant identiques. Ces compositions sont particulièrement utiles lorsque le compresseur centrifuge comporte des moyens d'adaptation de la vitesse, car elles permettent de réduire l'usure à laquelle est soumis le compresseur centrifuge en diminuant la vitesse de rotation.

### DESCRIPTION DE MODES DE REALISATION DE L'INVENTION

L'invention est maintenant décrite plus en détail et de façon non limitative dans la description qui suit.

### Définitions et généralités

Les proportions de l'ensemble des composés sont indiquées dans la demande en pourcentages massiques sauf mention contraire.

L'invention fournit en premier lieu une installation comprenant un circuit de compression de vapeur contenant un fluide de transfert de chaleur, ainsi qu'un procédé de chauffage ou de refroidissement d'un fluide ou d'un corps pouvant être mise en oeuvre au moyen de ladite installation.

Le fluide ou le corps chauffé ou refroidi peut notamment être de l'air contenu dans un espace essentiellement fermé.

Le circuit de compression de vapeur contenant un fluide de transfert de chaleur comprend au moins un évaporateur, un compresseur centrifuge, un condenseur et un détendeur, ainsi que des lignes de transport de fluide de transfert de chaleur entre ces éléments.

Un compresseur centrifuge est caractérisé en ce qu'il utilise des éléments rotatifs pour accélérer radialement le fluide de transfert de chaleur ; il comprend typiquement au moins un rotor et un diffuseur logés dans une enceinte. Le fluide de transfert de chaleur est introduit au centre du rotor et circule vers la périphérie du rotor en subissant une accélération. Ainsi, d'une part la pression statique augmente dans le rotor, et surtout d'autre part au niveau du diffuseur, la vitesse est convertie en augmentation de la pression statique. Chaque ensemble rotor/diffuseur constitue un étage du compresseur. Les compresseurs centrifuges peuvent comprendre de 1 à 12 étages, selon la pression finale souhaitée et le volume de fluide à traiter.

Le taux de compression est défini comme étant le rapport de la pression absolue du fluide de transfert de chaleur en sortie sur la pression absolue dudit fluide à l'entrée.

La vitesse de rotation pour les grands compresseurs centrifuges va de 3000 à 7000 tours par minute. Les petits compresseurs centrifuges (ou mini-compresseurs centrifuges) fonctionnent généralement à une vitesse de rotation qui va de 40000 à 70000 tours par minute et comportent un rotor de petite taille (généralement moins de 0,15 m).

On peut utiliser un rotor à plusieurs étages pour améliorer l'efficacité du compresseur et limiter le coût énergétique (par rapport à un rotor à un seul étage). Pour un système à deux étages, la sortie du premier étage du rotor alimente l'entrée du second rotor. Les deux rotors peuvent être montés sur un axe unique. Chaque étage peut fournir un taux de compression du fluide d'environ 4 sur 1, c'est-à-dire que la pression absolue de sortie peut être égale à environ quatre fois la pression absolue à l'aspiration. Des exemples de compresseurs centrifuges à deux étages, en particulier pour les applications automobiles, sont décrits dans les documents US 5,065,990 et US 5,363,674.

Le compresseur centrifuge peut être entraîné par un moteur électrique ou par une turbine à gaz (par exemple alimentée par les gaz d'échappement d'un véhicule, pour les applications mobiles) ou par engrenage.

L'installation peut comprendre un couplage du détendeur avec une turbine pour produire de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur), est absorbée par le fluide de transfert de chaleur, lors de l'évaporation de ce dernier, et ce à une température relativement faible par rapport à l'environnement.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement.

L'installation de refroidissement ou de chauffage selon l'invention peut être une installation mobile ou stationnaire.

Il peut s'agir notamment d'une installation de pompe à chaleur, auquel cas le fluide ou corps que l'on chauffe (généralement de l'air et éventuellement un ou plusieurs produits, objets ou organismes) est situé dans un local ou un habitacle de véhicule (pour une installation mobile). Selon un mode de réalisation préféré, il s'agit d'une installation de climatisation, auquel cas le fluide ou corps que l'on refroidit (généralement de l'air et éventuellement un ou plusieurs produits, objets ou organismes) est situé dans un local ou un habitacle de véhicule (pour une installation mobile). Il peut s'agir d'une installation de réfrigération ou d'une installation de congélation (ou installation cryogénique), auquel cas le fluide ou corps que l'on refroidit comprend généralement de l'air et un ou plusieurs produits, objets ou organismes, situés dans un local ou un contenant.

Par « composé de transfert de chaleur », respectivement « fluide de transfert de chaleur » (ou fluide frigorigène), on entend un composé, respectivement un fluide, susceptible d'absorber de la chaleur en s'évaporant à une température et une pression d'évaporation et de rejeter de la chaleur en se condensant à une température et une pression de condensation, supérieures respectivement à la température et à la pression d'évaporation, dans un circuit de compression de vapeur. Un fluide de transfert de chaleur peut comprendre un seul, deux, trois ou plus de trois composés de transfert de chaleur.

Un ou plusieurs additifs (qui ne sont essentiellement pas des composés de transfert de chaleur pour l'application envisagée) sont généralement ajoutés au fluide de transfert de chaleur pour fournir une « composition de transfert de chaleur » qui circule dans le circuit de compression de vapeur.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

### Mise en oeuvre de l'invention

L'invention repose sur le choix de deux critères permettant de produire des fluides de transfert de chaleur appropriés aux circuits de compression de vapeur comprenant un compresseur centrifuge, et plus précisément permettant de maintenir (ou d'améliorer) les performances du compresseur centrifuge sans avoir à en modifier la structure, par rapport à un fonctionnement reposant sur l'utilisation de HFC-134a pur en tant que fluide de transfert de chaleur.

Le premier critère retenu par l'invention est celui du nombre de Mach. Le nombre de Mach est égal au rapport de la vitesse périphérique du rotor du compresseur sur la vitesse du son à l'entrée dudit rotor.

Le deuxième critère retenu par l'invention est celui du taux de compression de ce compresseur. Le taux de compression est le rapport de la pression absolue en sortie sur la pression absolue à l'entrée du compresseur centrifuge.

Afin de garantir un maintien (voire une amélioration) des performances du compresseur centrifuge par rapport au fluide de transfert de chaleur HFC-134a, on souhaite que le nombre de Mach M₂ du compresseur centrifuge fonctionnant avec le fluide de transfert de chaleur considéré soit pratiquement égal au nombre de Mach M₁ de référence du compresseur centrifuge fonctionnant avec du HFC-134a pur en tant que fluide de transfert de chaleur ; plus précisément on souhaite que le rapport M₂/M₁ soit supérieur ou égal à 0,97 et inférieur ou égal à 1,03 (de préférence supérieur ou égal à 0,98 et inférieur ou égal à 1,02, ou supérieur ou égale à 0,99 et inférieur ou égal à 1,01, ou égal à environ 1) ; et on souhaite également que le taux de compression T₂ du compresseur centrifuge fonctionnant avec le fluide de transfert de chaleur considéré soit inférieur ou égal au taux de compression T₁ de référence du compresseur centrifuge fonctionnant avec du HFC-134a pur en tant que fluide de transfert de chaleur.

Un troisième critère utilisé (optionnellement) selon l'invention, en complément des deux précédents, est celui de la différence entre la pression au condenseur et la pression à l'évaporateur. Ainsi, selon un mode de réalisation particulier, on souhaite que cette différence de pression DP₂ du circuit de compression de vapeur fonctionnant avec le fluide de transfert de chaleur considéré soit inférieure ou égale à la différence de pression DP₁ du circuit de compression de vapeur fonctionnant avec le fluide de transfert de chaleur de référence (HFC-134a pur).

Le nombre de Mach du compresseur centrifuge doit être quasiment identique à celui du compresseur centrifuge fonctionnant avec du HFC-134a pur afin de garantir un fonctionnement équivalent et permettre une conversion possible de l'installation. Par contre, à vitesse de rotation constante, l'augmentation du taux de compression entraîne une diminution de la puissance du compresseur à travailler suivant les mêmes conditions de températures. De même, le travail nécessaire à la compression diminue avec la diminution de la différence de pression entre l'évaporateur et le condenseur. Ceci signifie que l'efficacité du système augmente avec la diminution de la différence de pression et du taux de compression entre l'évaporateur et le condenseur pour les mêmes températures de fonctionnement.

Pour chacun des critères précédents, la comparaison entre le fluide de transfert de chaleur considéré et le HFC-134a pur est effectuée dans les mêmes conditions de fonctionnement, ce qui signifie d'une part que le circuit de compression de vapeur est exactement le même et la structure du compresseur centrifuge est exactement la même ; et d'autre part que la température à l'évaporateur et au condenseur sont identiques dans les deux cas. Par exemple, la comparaison peut être effectuée avec une température de 4°C à l'évaporateur et de 37°C au condenseur.

Selon la deuxième variante de l'invention (variante de la vitesse constante), le compresseur centrifuge fonctionne à une vitesse prédéterminée qui ne peut pas être modifiée. Le rotor tourne alors à la même vitesse avec le fluide de transfert considéré et avec le fluide de référence (HFC-134a pur).

En revanche, selon la première variante de l'invention (variante de la vitesse variable), le compresseur centrifuge peut fonctionner dans une certaine plage de vitesses. C'est notamment le cas pour un compresseur centrifuge fonctionnant avec un moteur électrique et doté d'un variateur de vitesse.

Dans cette première variante, une modification de la vitesse du compresseur entre le fonctionnement avec le fluide de transfert de chaleur de référence (HFC-134a pur) et le fluide de transfert considéré peut permettre d'obtenir un rapport M₂/M₁ de 0,97 à 1,03 et un rapport T₂/T₁ inférieur ou égal à 1 pour d'autres formulations de fluide de transfert de chaleur que celles permettant d'obtenir un rapport M₂/M₁ de 0,97 à 1,03 et un rapport T₂/T₁ inférieur ou égal à 1 à vitesse du rotor identique. En d'autres termes, ce deuxième mode de réalisation permet d'élargir le domaine des fluides de transfert de chaleur envisageables.

Toujours selon cette première variante, il est particulièrement avantageux de prévoir que la vitesse du rotor avec le fluide de transfert de chaleur considéré soit inférieure à la vitesse du rotor avec le fluide de transfert de chaleur de référence (HFC-134a pur). En effet, cela permet de limiter l'usure à laquelle est soumis le compresseur centrifuge.

Dans les deux variantes, les rapports M₂/M₁ et T₂/T₁ (et éventuellement DP₂/DP₁) peuvent être déterminés expérimentalement ou par calcul et / ou simulation numérique.

Le nombre de Mach, le taux de compression et la différence de pression sont calculés pour chaque mélange dans les mêmes conditions de fonctionnement types. Ces calculs sont réalisés en utilisant les modèles thermodynamiques correspondants pour chaque produit. La méthode de modélisation est basée sur l'équation de RK-Soave. Le développement des modèles est basé sur des mesures expérimentales décrites dans l'exemple 1.

Des fluides de transfert de chaleur comprenant au moins deux composés choisis parmi le HFO-1234yf, le HFO-1234ze, le HFC-134a, le HFC-152a et le HFO-1243zf répondent aux deux (ou trois critères) mentionnés ci-dessus et fournissent donc des substituts très efficaces au HFC-134a pur dans les circuits de compression de vapeur à compresseur centrifuge.

L'ensemble de ces cinq composés ont une température d'ébullition proche, comprise entre -30 et -18°C.

Le HFO-1234ze peut être sous sa forme cis ou trans. De préférence, le HFO-1234ze utilisé dans le cadre de l'invention contient au moins 80 % de forme trans, de préférence au moins 90 % ou au moins 95 % ou au moins 98 % ou au moins 99 % de forme trans.

Ces fluides de transfert de chaleur peuvent être constitués par deux des composés ci-dessus ou trois des composés ci-dessus ou quatre des composés ci-dessus ou encore les cinq composés ci-dessus.

De manière complémentaire, il est souhaitable que les fluides de transfert de chaleur :
- soient non-inflammables (au sens de la norme ASHRAE 34-2007, et de préférence avec une température de test de 60°C au lieu de 100°C) ;
- soient quasi-azéotropiques ; et
- aient un bas GWP (en particulier, les fluides de transfert de chaleur peuvent avoir un GWP inférieur ou égal à 1250, de préférence inférieur ou égal à 1000, inférieur ou égal à 750, inférieur ou égal à 500, inférieur ou égal à 250 , voire inférieur ou égal à 150).

Des fluides de transfert de chaleur particulièrement appropriés pour la substitution du HFC-134a pur dans un circuit de compression de vapeur comprenant un compresseur centrifuge à vitesse constante sont listés ci-dessous :
- fluides de transfert de chaleur binaires :
   - HFO-1234yf / HFC-134a : de 2 à 50 % de HFO-1234yf et de 50 à 98 % de HFC-134a, en particulier de 2 à 30 % de HFO-1234yf et de 70 à 98 % de HFC-134a, et en particulier de 5 à 15 % de HFO-1234yf et de 85 à 95 % de HFC-134a ;
   - HFO-1234yf / HFC-152a : de 50 à 90 % de HFO-1234yf et de 10 à 50 % de HFC-152a, en particulier de 60 à 90 % de HFO-1234yf et 10 à 40 % de HFC-152a et en particulier de 70 à 80 % de HFO-1234yf et de 20 à 30 % de HFC-152a ;
   - HFO-1243zf / HFC-134a : de 30 à 90 % de HFO-1243zf et de 10 à 70 % de HFC-134a, en particulier de 40 à 80 % de HFO-1243zf et de 20 à 60 % de HFC-134a, et en particulier de 50 à 65 % de HFO-1243zf et de 35 à 50 % de HFC-134a ;
   - HFO-1243zf / HFO-1234yf : de 60 à 90 % de HFO-1243zf et de 10 à 40 % de HFO-1234yf, en particulier de 70 à 90 % de HFO-1243zf et de 10 à 30 % de HFO-1234yf, et en particulier de 80 à 90 % de HFO-1243zf et de 10 à 20 % de HFO-1234yf ;
   - HFO-1243zf / HFO-1234ze : de 30 à 80 % de HFO-1243zf et de 20 à 70 % de HFO-1234ze, en particulier de 40 à 70 % de HFO-1243zf et de 20 à 60 % de HFO-1234ze, et en particulier de 50 à 70 % de HFO-1243zf et de 30 à 50 % de HFO-1234ze ;
- fluides de transfert de chaleur ternaires :
   - HFO-1234yf / HFC-134a / HFC-152a : de 18 à 93 % de HFO-1234yf et de 5 à 80 % de HFC-134a et de 2 à 50 % de HFC-152a, en particulier de 20 à 93 % de HFO-1234yf et de 5 à 60% de HFC-134a et de 2 à 30 % de HFC-152a, et en particulier de 30 à 88 % de HFO-1234yf et de 5 à 60 % de HFC-134a et de 7 à 20 % de HFC-152a ;
   - HFO-1234yf / HFC-134a / HFO-1243zf : de 10 à 80 % de HFO-1234yf et de 5 à 60 % de HFC-134a et de 15 à 80 % de HFO-1243zf, en particulier de 10 à 75 % de HFO-1234yf et de 5 à 60 % de HFC-134a et de 20 à 80 % de HFO-1243zf, et en particulier de 10 à 65 % de HFO-1234yf et de 5 à 50 % de HFC-134a et de 30 à 80 % de HFO-1243zf ;
   - HFO-1234yf / HFC-152a / HFO-1234ze : de 15 à 85 % de HFO-1234yf et de 5 à 30 % de HFC-152a et de 5 à 60 % de HFO-1234ze, en particulier de 20 à 85 % de HFO-1234yf et de 10 à 30 % de HFC-152a et de 5 à 50 % de HFO-1234ze, et en particulier de 35 à 80 % de HFO-1234yf et de 15 à 25 % de HFC-152a et de 5 à 40 % de HFO-1234ze ;
   - HFO-1234yf / HFC-152a / HFO-1243zf : de 10 à 78 % de HFO-1234yf et de 3 à 15 % de HFC-152a et de 20 à 70 % de HFO-1243zf, en particulier de 15 à 67 % de HFO-1234yf et de 3 à 10% de HFC-152a et de 30 à 70 % de HFO-1243zf, et en particulier de 21 à 57 % de HFO-1234yf et de 3 à 9% de HFC-152a et de 40 à 70 % de HFO-1243zf ;
   - HFC-134a / HFC-152a / HFO-1234ze : de 20 à 82 % de HFC-134a et de 3 à 20 % de HFC-152a et de 15 à 60 % de HFO-1234ze, en particulier de 35 à 82 % de HFC-134a et de 3 à 15 % de HFC-152a et de 15 à 50 % de HFO-1234ze, et en particulier de 60 à 75 % de HFC-134a et de 5 à 10 % de HFC-152a et de 20 à 30 % de HFO-1234ze ;
   - HFC-152a / HFO-1243zf / HFO-1234ze : de 3 à 15 % de HFO-152a et de 20 à 50 % de HFO-1243zf et de 35 à 77 % de HFO-1234ze, en particulier de 3 à 15 % de HFO-152a et de 25 à 50 % de HFO-1243zf et de 35 à 72 % de HFO-1234ze, et en particulier de 4 à 10 % de HFO-152a et de 30 à 50 % de HFO-1243zf et de 40 à 66 % de HFO-1234ze.

Des fluides de transfert de chaleur particulièrement appropriés pour la substitution du HFC-134a pur dans un circuit de compression de vapeur comprenant un compresseur centrifuge à vitesse variable, et en particulier permettant un fonctionnement du compresseur centrifuge à vitesse inférieure par rapport au fonctionnement avec du HFC-134a pur sont listés ci-dessous :
- fluides de transfert de chaleur binaires :
   - HFO-1234yf / HFC-134a : de 2 à 50 % de HFO-1234yf et de 50 à 98 % de HFC-134a, en particulier de 5 à 40 % de HFO-1234yf et de 60 à 95 % de HFC-134a, et en particulier de 5 à 30 % de HFO-1234yf et de 70 à 95 % de HFC-134a ;
   - HFO-1234yf / HFC-152a : de 50 à 95 % de HFO-1234yf et de 5 à 50 % de HFC-152a, en particulier de 60 à 95 % de HFO-1234yf et de 5 à 40 % de HFC-152a, et en particulier de 85 à 90 % de HFO-1234yf et de 10 à 15 % de HFC-152a ;
   - HFO-1243zf / HFC-134a : de 30 à 90 % de HFO-1243zf et de 10 à 70 % de HFC-134a, en particulier de 40 à 80 % de HFO-1243zf et de 20 à 60 % de HFC-134a, et en particulier de 50 à 65 % de HFO-1243zf et de 35 à 50 % de HFC-134a ;
   - HFO-1243zf / HFO-1234yf : de 30 à 90 % de HFO-1243zf et de 10 à 70 % de HFO-1234yf, en particulier de 40 à 80 % de HFO-1243zf et de 20 à 60 % de HFO-1234yf, et en particulier de 50 à 60 % de HFO-1243zf et de 40 à 50 % de HFO-1234yf ;
   - HFO-1243zf / HFO-1234ze : de 30 à 80 % de HFO-1243zf et de 20 à 70 % de HFO-1234ze, en particulier de 40 à 70 % de HFO-1243zf et de 30 à 60 % de HFO-1234ze, et en particulier de 50 à 70 % de HFO-1243zf et de 30 à 50 % de HFO-1234ze ;
- fluides de transfert de chaleur ternaires :
   - HFO-1234yf / HFC-134a / HFC-152a : de 10 à 93 % de HFO-1234yf et de 5 à 80 % de HFC-134a et de 2 à 50 % de HFC-152a, en particulier de 13 à 93 % de HFO-1234yf et de 5 à 60% de HFC-134a et de 2 à 30 % de HFC-152a, et en particulier de 25 à 92 % de HFO-1234yf et de 5 à 60 % de HFC-134a et de 3 à 15 % de HFC-152a ;
   - HFO-1234yf / HFC-134a / HFO-1243zf : de 5 à 90 % de HFO-1234yf et de 5 à 60 % de HFC-134a et de 5 à 70 % de HFO-1243zf, en particulier de 10 à 85 % de HFO-1234yf et de 5 à 60 % de HFC-134a et de 10 à 70 % de HFO-1243zf, et en particulier de 10 à 60 % de HFO-1234yf et de 5 à 50 % de HFC-134a et de 20 à 60 % de HFO-1243zf ;
   - HFO-1234yf / HFC-152a / HFO-1234ze : de 10 à 90 % de HFO-1234yf et de 5 à 30 % de HFC-152a et de 5 à 70 % de HFO-1234ze, en particulier de 20 à 85 % de HFO-1234yf et de 10 à 20 % de HFC-152a et de 5 à 60 % de HFO-1234ze, et en particulier de 30 à 85 % de HFO-1234yf et de 10 à 15 % de HFC-152a et de 5 à 50 % de HFO-1234ze ;
   - HFO-1234yf / HFC-152a / HFO-1243zf : de 10 à 89 % de HFO-1234yf et de 3 à 20 % de HFC-152a et de 8 à 70 % de HFO-1243zf, en particulier de 35 à 89 % de HFO-1234yf et de 3 à 15 % de HFC-152a et de 8 à 50 % de HFO-1243zf, et en particulier de 50 à 85 % de HFO-1234yf et de 5 à 10 % de HFC-152a et de 10 à 40 % de HFO-1243zf ;
   - HFC-134a / HFC-152a / HFO-1234ze : de 20 à 87 % de HFC-134a et de 3 à 20 % de HFC-152a et de 10 à 60 % de HFO-1234ze, en particulier de 45 à 87 % de HFC-134a et de 3 à 15 % de HFC-152a et de 10 à 40 % de HFO-1234ze, et en particulier de 60 à 85 % de HFC-134a et de 5 à 10 % de HFC-152a et de 10 à 30 % de HFO-1234ze ;
   - HFC-152a / HFO-1243zf / HFO-1234ze : de 3 à 15 % de HFO-152a et de 15 à 60 % de HFO-1243zf et de 25 à 82 % de HFO-1234ze, en particulier de 3 à 15 % de HFO-152a et de 15 à 50 % de HFO-1243zf et de 35 à 82 % de HFO-1234ze, et en particulier de 5 à 10 % de HFO-152a et de 20 à 50 % de HFO-1243zf et de 40 à 75 % de HFO-1234ze.

### EXEMPLES

Les exemples suivants illustrent l'invention sans la limiter.

### Exemple 1 : compresseur centrifuge fonctionnant à vitesse constante

Dans cet exemple, on considère un circuit de compression de vapeur équipé d'un évaporateur, d'un condenseur, d'un compresseur centrifuge à un seul étage et d'un détendeur. Le système fonctionne avec 0°C de surchauffe, 0°C de sous-refroidissement, une température d'évaporation du fluide de transfert de chaleur à l'évaporateur de 4°C et une température de condensation du fluide de transfert de chaleur au condenseur de 37°C.

On calcule les performances du système avec différents fluides de transfert de chaleur. Pour ce faire, on utilise l'équation RK-Soave pour la détermination des densités, enthalpies, entropies, vitesse du son, température, pression et chaleur spécifiques.

Les données relatives à chaque corps pur nécessaires pour le calcul sont tout d'abord la température d'ébullition, la température et la pression critique, la courbe de pression en fonction de la température à partir du point d'ébullition jusqu'au point critique, les densités de liquide saturée et de vapeur saturée en fonction de la température, la chaleur spécifique des gaz parfaits, et ce pour chaque corps pur.

Pour le HFC-134a et le HFC-152a, les données sont publiées dans l'ASHRAE Handbook 2005, chapitre 20 et sont disponibles également dans le logiciel Refprop de NIST.

Pour le HFO-1234ze, le HFO-1234yf et HFO-1243zf, la courbe température / pression est mesurée par la méthode statique. La température critique et la pression critique sont mesurées par un calorimètre C80 commercialisé par Setaram. Les densités à saturation en fonction de la température sont mesurées par la technologie du densimètre à tube vibrant (laboratoires de l'école des Mines de Paris).

On utilise également en tant que données dans les calculs les coefficients d'interaction des mélanges binaires, pour représenter le comportement des produits en mélanges. Les coefficients sont calculés en fonction des données expérimentales d'équilibre liquide / vapeur.

La technique utilisée pour les mesures d'équilibre liquide / vapeur est la méthode de la cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie en phase gazeuse (HP5890 series II) utilisant un catharomètre (TCD).

Les mesures d'équilibre liquide / vapeur sur le mélange binaire HFC-134a / HFO-1234yf sont réalisées pour l'isotherme de 20°C. Les mesures d'équilibre liquide / vapeur sur le binaire HFO-1234yf / HFC-152a sont réalisées pour l'isotherme de 10°C. Les mesures d'équilibre liquide / vapeur sur le mélange binaire HFO-1234ze / HFC-152a sont réalisées pour l'isotherme de 15°C. Les mesures d'équilibre liquide / vapeur sur le mélange binaire HFC-134a / HFO-1234ze sont réalisées pour l'isotherme de 20°C. Les mesures d'équilibre liquide / vapeur sur le mélange binaire HFO-1234ze / HFO-1234yf sont réalisées pour l'isotherme de 18°C. Les mesures d'équilibre liquide / vapeur sur le mélange binaire HFO-1243zf / HFO-1234yf sont réalisées pour l'isotherme de 21°C. Les mesures d'équilibre liquide / vapeur sur le mélange binaire HFO-1243zf / HFC-152a sont réalisées pour l'isotherme de 10°C. Les mesures d'équilibre liquide / vapeur sur le mélange binaire HFO-1243zf / HFC-134a sont réalisées pour l'isotherme de 10°C.

Les données d'équilibre liquide / vapeur pour le mélange binaire HFC-134a / HFC-152a sont disponibles sous Refprop. Quatre isothermes (-10, 30, 40 et 50°C) et deux isobares (1 bar et 30 bar) sont utilisées pour le calcul des coefficients d'interaction pour ce mélange binaire.

Dans le présent exemple, on considère que le compresseur centrifuge fonctionne à vitesse constante. Les tableaux 1a, 1b, et 1c résument les performances obtenues avec quelques fluides de transfert de chaleur selon l'invention, en comparaison avec le HFC-134a pur.

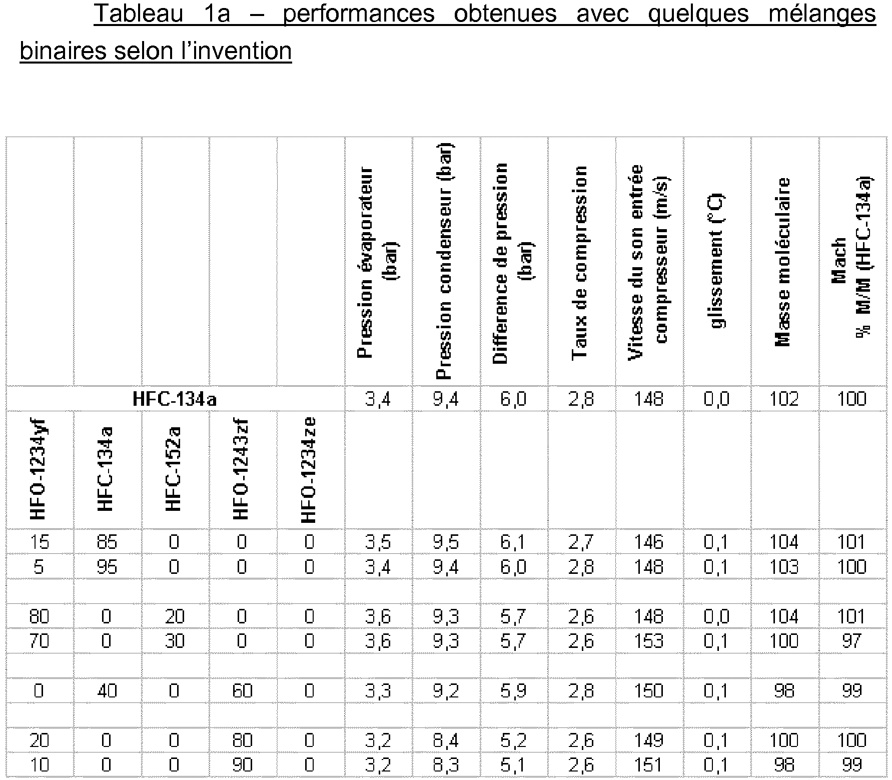

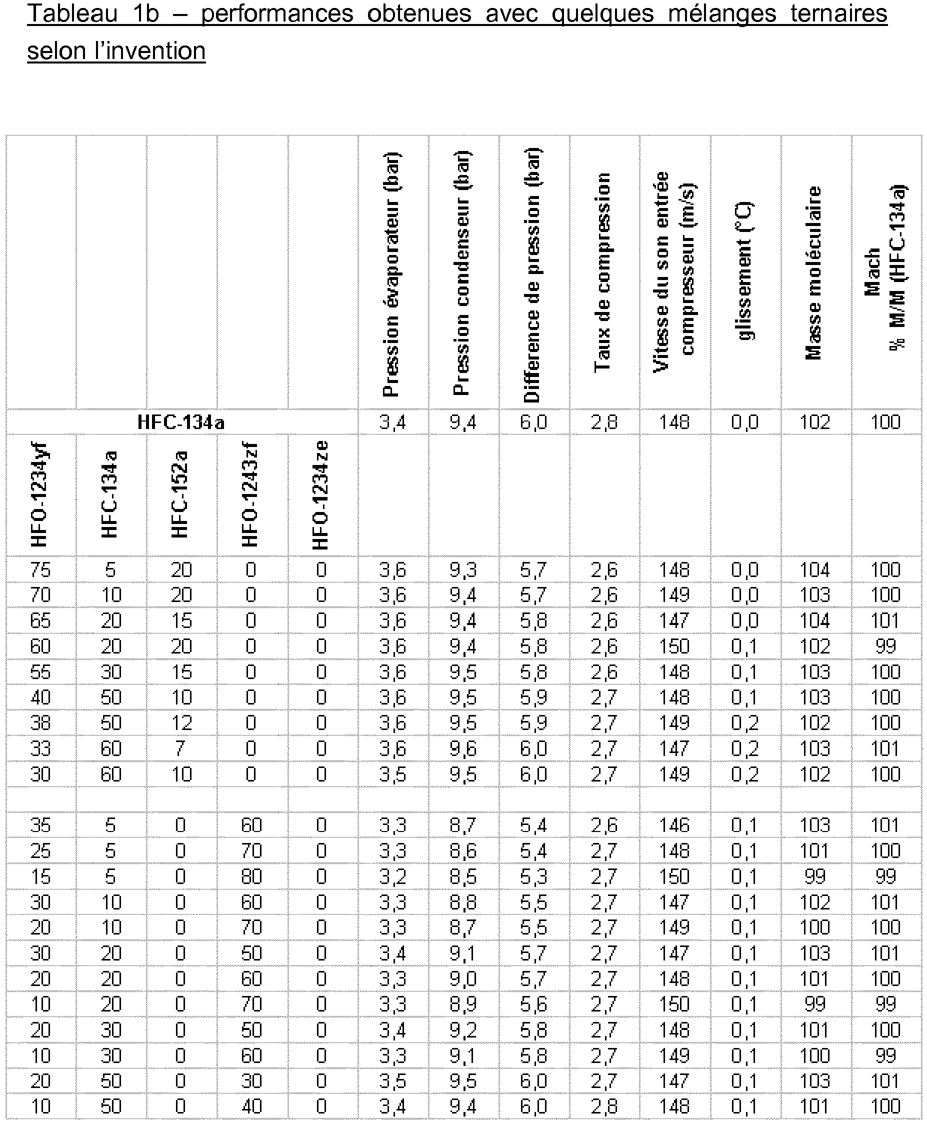

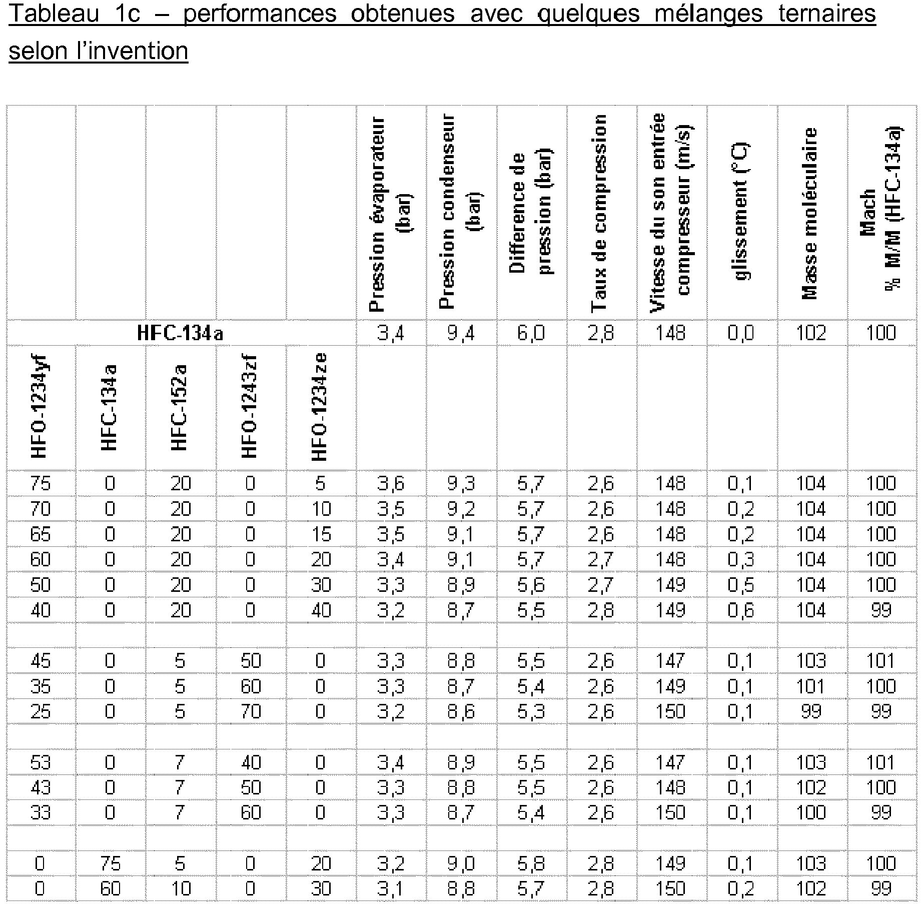

### Exemple 2 : compresseur centrifuge fonctionnant à vitesse variable

Dans cet exemple, on reproduit les mêmes calculs qu'à l'exemple 1, mais en considérant que la vitesse du compresseur centrifuge peut être adaptée par rapport à la vitesse de rotation avec le HFC-134a. Les tableaux 2a, 2b, et 2c résument les performances obtenues avec quelques fluides de transfert de chaleur selon l'invention, en comparaison avec le HFC-134a pur.

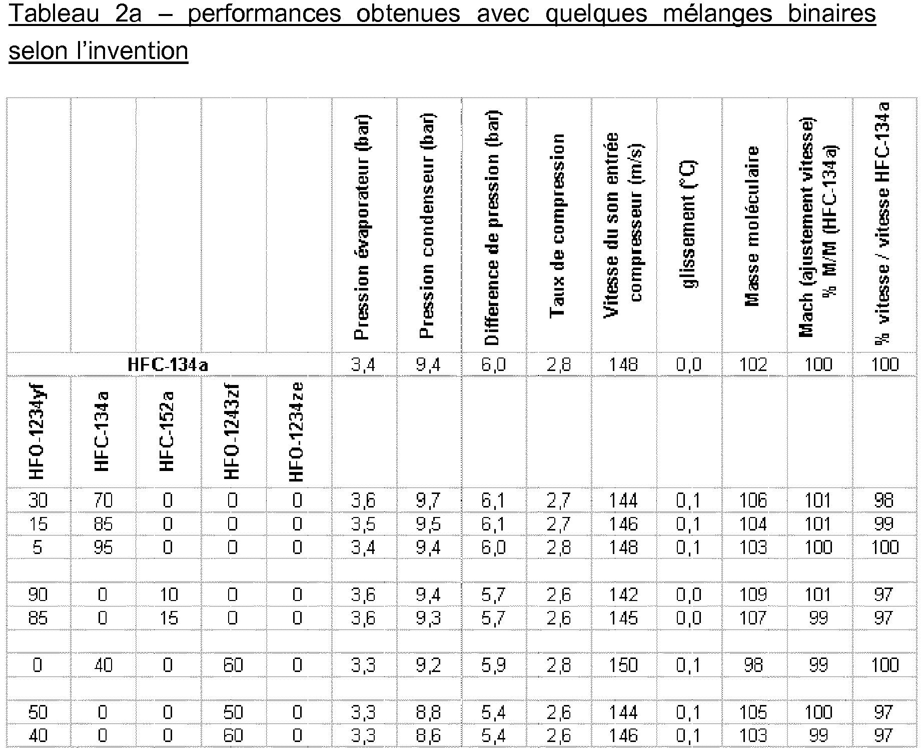

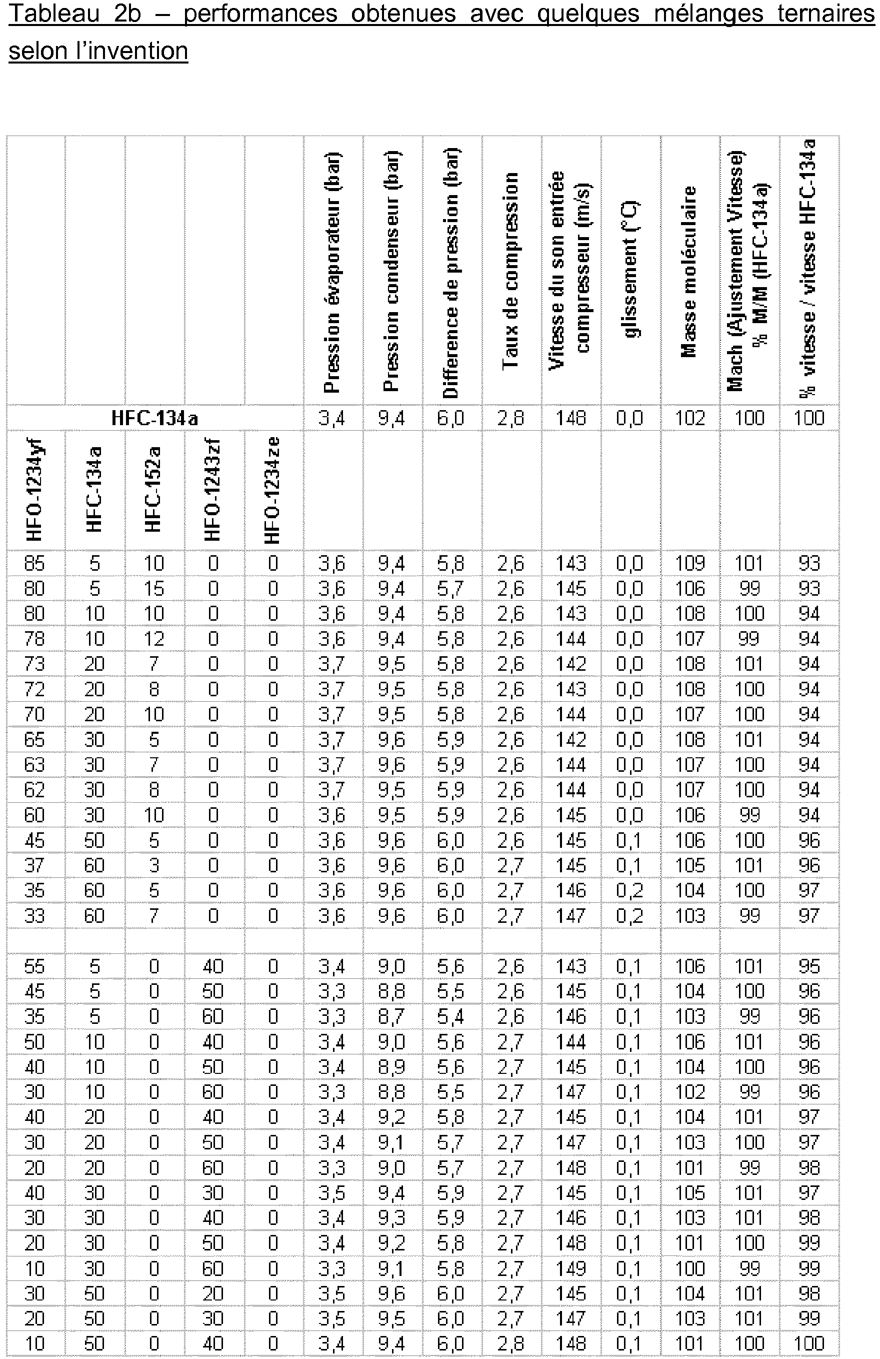

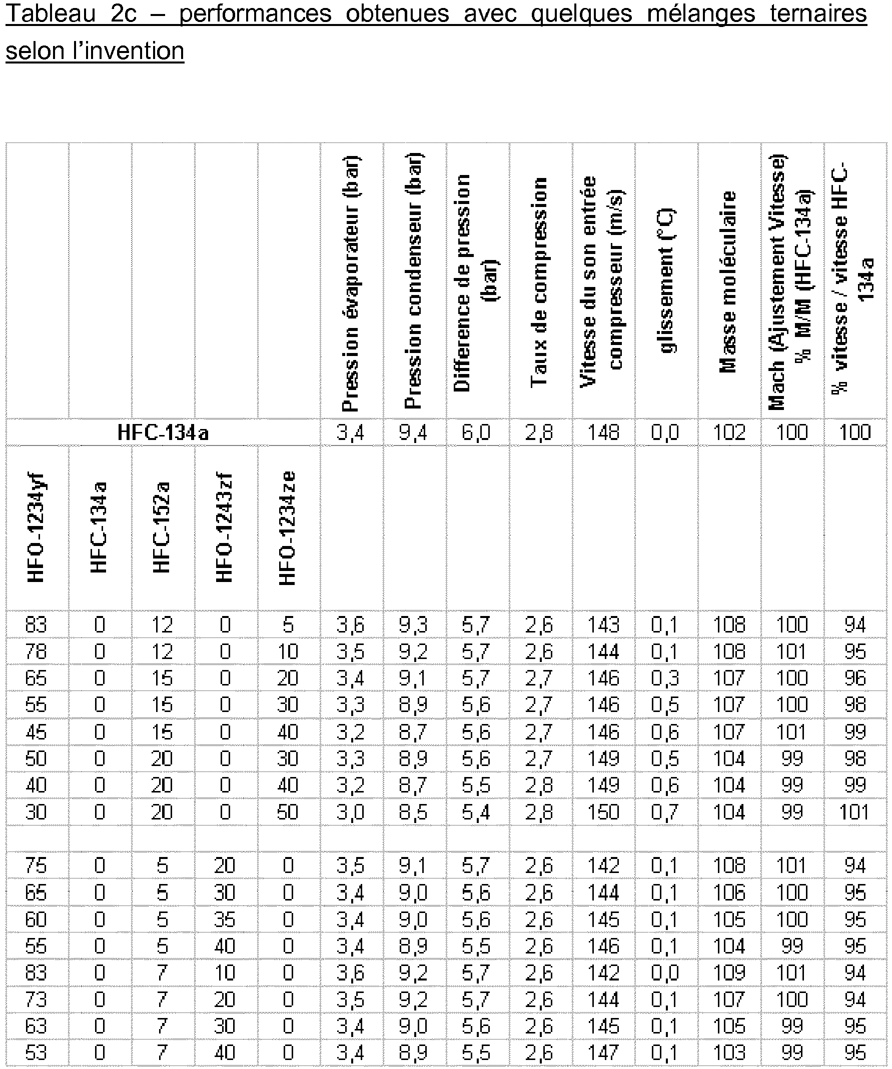

## Revendications

1. Procédé de refroidissement ou de chauffage d'un fluide ou d'un corps au moyen d'un circuit de compression de vapeur comportant un compresseur centrifuge et contenant un fluide de transfert de chaleur, le fluide de transfert de chaleur comprenant au moins deux composés choisis parmi le 2,3,3,3-tétrafluoropropène, le 1,3,3,3-tétrafluoropropène, le 1,1,1,2-tétrafluoroéthane, le 1,1-difluoroéthane et le 3,3,3-trifluoropropène, dans lequel :
- le rapport du nombre de Mach du compresseur centrifuge sur le nombre de Mach qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur, est supérieur ou égal à 0,97 et inférieur ou égal à 1,03 ;
- le taux de compression du compresseur centrifuge est inférieur ou égal au taux de compression qu'a le compresseur centrifuge, dans les mêmes conditions de fonctionnement, lorsque le fluide de transfert de chaleur est remplacé par du 1,1,1,2-tétrafluoroéthane dans le circuit de compression de vapeur, dans lequel le fluide de transfert de chaleur comprend, de préférence consiste en, un mélange :
- de 2,3,3,3-tétrafluoropropène et de 1,1,1,2-tétrafluoroéthane ; ou
- de 2,3,3,3-tétrafluoropropène et de 1,1-difluoroéthane ; ou
- de 2,3,3,3-tétrafluoropropène et de 3,3,3-trifluoropropène ; ou
- de 1,3,3,3-tétrafluoropropène et de 3,3,3-trifluoropropène ; ou
- de 1,1,1,2-tétrafluoroéthane et de 3,3,3-trifluoropropène ; ou
- de 2,3,3,3-tétrafluoropropène, de 1,3,3,3-tétrafluoropropène et de 1,1-difluoroéthane ;
- de 2,3,3,3-tétrafluoropropène, de 1,1,1,2-tétrafluoroéthane et de 1,1-difluoroéthane ; ou
- de 2,3,3,3-tétrafluoropropène, de 1,1,1,2-tétrafluoroéthane et de 3,3,3-trifluoropropène ; ou
- de 2,3,3,3-tétrafluoropropène, de 1,1-difluoroéthane et de 3,3,3-trifluoropropène ; ou
- de 1,3,3,3-tétrafluoropropène, de 1,1,1,2-tétrafluoroéthane et de 1,1-difluoroéthane ; ou
- de 1,3,3,3-tétrafluoropropène, de 1,1-difluoroéthane et de 3,3,3-trifluoropropène.

2. Procédé selon la revendication 1, dans lequel le circuit de compression de vapeur comprend un évaporateur et un condenseur, et dans lequel :
- la différence entre la pression au condenseur et la pression à l'évaporateur est inférieure ou égale à la différence entre la pression au condenseur et la pression à l'évaporateur qui est obtenue, dans les mêmes conditions de fonctionnement, lorsque le fluide de transfert de chaleur est remplacé par du 1,1,1,2-tétrafluoroéthane dans le circuit de compression de vapeur.

3. Procédé selon l'une quelconque des revendications précédentes, dans lequel le fluide de transfert de chaleur comprend :
- de 2 % à 50 % de 2,3,3,3-tétrafluoropropène et de 50 % à 98 % de 1,1,1,2-tétrafluoroéthane, de préférence de 5 % à 40 % de 2,3,3,3-tétrafluoropropène et de 60 % à 95 % de 1,1,1,2-tétrafluoroéthane, et de manière plus particulièrement préférée de 5 % à 30 % de 2,3,3,3-tétrafluoropropène et de 70 % à 95 % de 1,1,1,2-tétrafluoroéthane ; ou
- de 50 % à 95 % de 2,3,3,3-tétrafluoropropène et de 5 % à 50 % de 1,1-difluoroéthane, de préférence de 60 % à 95 % de 2,3,3,3-tétrafluoropropène et de 5 % à 40 % de 1,1-difluoroéthane, et de manière plus particulièrement préférée de 85 % à 90 % de 2,3,3,3-tétrafluoropropène et de 10 % à 15 % de 1,1-difluoroéthane ; ou
- de 10 % à 70 % de 2,3,3,3-tétrafluoropropène et de 30 % à 90 % de 3,3,3-trifluoropropène, de préférence de 20 % à 60 % de 2,3,3,3-tétrafluoropropène et de 40 % à 80 % de 3,3,3-trifluoropropène, et de manière plus particulièrement préférée de 40 % à 50 % de 2,3,3,3-tétrafluoropropène et de 50 % à 60 % de 3,3,3-trifluoropropène ; ou
- de 10 % à 70 % de 1,1,1,2-tétrafluoroéthane et de 30 % à 90 % de 3,3,3-trifluoropropène, de préférence de 20 % à 60 % de 1,1,1,2-tétrafluoroéthane et de 40 % à 80 % de 3,3,3-trifluoropropène, et de manière plus particulièrement préférée de 35 % à 50 % de 1,1,1,2-tétrafluoroéthane et de 55 % à 65 % de 3,3,3-trifluoropropène ; ou
- de 10 % à 93 % de 2,3,3,3-tétrafluoropropène, de 5 % à 80 % de 1,1,1,2-tétrafluoroéthane et de 2 % à 50 % de 1,1-difluoroéthane, de préférence de 13 % à 93 % de 2,3,3,3-tétrafluoropropène, de 5 % à 60% de 1,1,1,2-tétrafluoroéthane et de 2 % à 30 % de 1,1-difluoroéthane, et de manière plus particulièrement préférée de 25 % à 92 % de 2,3,3,3-tétrafluoropropène, de 5 % à 60 % de 1,1,1,2-tétrafluoroéthane et de 3 % à 15 % de 1,1-difluoroéthane ; ou
- de 5 % à 90 % de 2,3,3,3-tétrafluoropropène, de 5 % à 60 % de 1,1,1,2-tétrafluoroéthane et de 5 % à 70 % de 3,3,3-trifluoropropène, de préférence de 10 % à 85 % de 2,3,3,3-tétrafluoropropène, de 5 % à 60% de 1,1,1,2-tétrafluoroéthane et de 10 % à 70 % de 3,3,3-trifluoropropène, et de manière plus particulièrement préférée de 10 % à 60 % de 2,3,3,3-tétrafluoropropène, de 5 % à 50 % de 1,1,1,2-tétrafluoroéthane et de 20 % à 60 % de 3,3,3-trifluoropropène ; ou
- de 10 % à 89 % de 2,3,3,3-tétrafluoropropène, de 3 % à 20 % de 1,1-difluoroéthane et de 8 % à 70 % de 3,3,3-trifluoropropène, de préférence de 35 % à 89 % de 2,3,3,3-tétrafluoropropène, de 3 % à 15 % de 1,1-difluoroéthane et de 8 % à 50 % de 3,3,3-trifluoropropène, et de manière plus particulièrement préférée de 50 % à 85 % de 2,3,3,3-tétrafluoropropène, de 5 % à 10 % de 1,1-difluoroéthane et de 10 % à 40 % de 3,3,3-trifluoropropène ; ou

4. Procédé de refroidissement ou de chauffage d'un fluide ou d'un corps au moyen d'un circuit de compression de vapeur comportant un compresseur centrifuge et contenant un fluide de transfert de chaleur, le fluide de transfert de chaleur comprenant, et de préférence consistant en :
- de 2 % à 50 % de 2,3,3,3-tétrafluoropropène et de 50 % à 98 % de 1,1,1,2-tétrafluoroéthane ; ou
- de 50 % à 95 % de 2,3,3,3-tétrafluoropropène et de 5 % à 50 % de 1,1-difluoroéthane ; ou
- de 10 % à 70 % de 2,3,3,3-tétrafluoropropène et de 30 % à 90 % de 3,3,3-trifluoropropène ; ou
- de 20 % à 70 % de 1,3,3,3-tétrafluoropropène et de 30 % à 80 % de 3,3,3-trifluoropropène ; ou
- de 10 % à 70 % de 1,1,1,2-tétrafluoroéthane et de 30 % à 90 % de 3,3,3-trifluoropropène ; ou
- de 10 % à 90 % de 2,3,3,3-tétrafluoropropène, de 5 % à 70 % de 1,3,3,3-tétrafluoropropène et de 5 % à 30 % de 1,1-difluoroéthane ; ou
- de 10 % à 93 % de 2,3,3,3-tétrafluoropropène, de 5 % à 80 % de 1,1,1,2-tétrafluoroéthane et de 2 % à 50 % de 1,1-difluoroéthane ; ou
- de 5 % à 90 % de 2,3,3,3-tétrafluoropropène, de 5 % à 60 % de 1,1,1,2-tétrafluoroéthane et de 5 % à 80 % de 3,3,3-trifluoropropène ; ou
- de 10 % à 89 % de 2,3,3,3-tétrafluoropropène, de 3 % à 20 % de 1,1-difluoroéthane et de 8 % à 70 % de 3,3,3-trifluoropropène ; ou
- de 10 % à 60 % de 1,3,3,3-tétrafluoropropène, de 20 % à 87 % de 1,1,1,2-tétrafluoroéthane et de 3 % à 20 % de 1,1-difluoroéthane ; ou
- de 25 % à 82 % de 1,3,3,3-tétrafluoropropène, de 3 % à 15 % de 1,1-difluoroéthane et de 15 % à 60 % de 3,3,3-trifluoropropène.

5. Procédé selon la revendication 4, dans lequel le fluide de transfert de chaleur comprend :
- de 2 % à 30 % de 2,3,3,3-tétrafluoropropène et de 70 % à 98 % de 1,1,1,2-tétrafluoroéthane, de préférence de 5 % à 15 % de 2,3,3,3-tétrafluoropropène et de 85 % à 95 % de 1,1,1,2-tétrafluoroéthane ; ou
- de 5 % à 40 % de 2,3,3,3-tétrafluoropropène et de 60 % à 95 % de 1,1,1,2-tétrafluoroéthane de préférence de 5 % à 30 % de 2,3,3,3-tétrafluoropropène et de 70 % à 95 % de 1,1,1,2-tétrafluoroéthane ; ou
- de 60 % à 90 % de 2,3,3,3-tétrafluoropropène et de 10 % à 40 % de 1,1-difluoroéthane, de préférence de 70 % à 80 % de 2,3,3,3-tétrafluoropropène et de 20 % à 30 % de 1,1-difluoroéthane ; ou
- de 60 % à 95 % de 2,3,3,3-tétrafluoropropène et de 5 % à 40 % de 1,1-difluoroéthane, de préférence de 85 % à 90 % de 2,3,3,3-tétrafluoropropène et de 10 % à 15 % de 1,1-difluoroéthane ; ou
- de 10 % à 30 % de 2,3,3,3-tétrafluoropropène et de 70 % à 90 % de 3,3,3-trifluoropropène, de préférence de 10 % à 20 % de 2,3,3,3-tétrafluoropropène et de 80 % à 90 % de 3,3,3-trifluoropropène ; ou
- de 20 % à 60 % de 2,3,3,3-tétrafluoropropène et de 40 % à 80 % de 3,3,3-trifluoropropène, de préférence de 40 % à 50 % de 2,3,3,3-tétrafluoropropène et de 50 % à 60 % de 3,3,3-trifluoropropène ; ou
- de 30 % à 60 % de 1,3,3,3-tétrafluoropropène et de 40 % à 70 % de 3,3,3-trifluoropropène, de préférence de 30 % à 50 % de 1,3,3,3-tétrafluoropropène et de 50 % à 70 % de 3,3,3-trifluoropropène ; ou
- de 20 % à 60 % de 1,1,1,2-tétrafluoroéthane et de 40 % à 80 % de 3,3,3-trifluoropropène, de préférence de 35 % à 50 % de 1,1,1,2-tétrafluoroéthane et de 50 % à 65 % de 3,3,3-trifluoropropène ; ou
- de 20 % à 85 % de 2,3,3,3-tétrafluoropropène, de 5 % à 50 % de 1,3,3,3-tétrafluoropropène et de 10 % à 30 % de 1,1-difluoroéthane, de préférence de 35 % à 80 % de 2,3,3,3-tétrafluoropropène, de 5 % à 40 % de 1,3,3,3-tétrafluoropropène et de 15 % à 25 % de 1,1-difluoroéthane ; ou
- de 20 % à 85 % de 2,3,3,3-tétrafluoropropène, de 5 % à 60 % de 1,3,3,3-tétrafluoropropène et de 10 % à 20 % de 1,1-difluoroéthane, de préférence de 30 % à 85 % de 2,3,3,3-tétrafluoropropène, de 5 % à 50 % de 1,3,3,3-tétrafluoropropène et de 10 % à 15 % de 1,1-difluoroéthane ; ou
- de 20 % à 93 % de 2,3,3,3-tétrafluoropropène, de 5 % à 60 % de 1,1,1,2-tétrafluoroéthane et de 2 % à 30 % de 1,1-difluoroéthane, de préférence de 30 % à 88 % de 2,3,3,3-tétrafluoropropène, de 5 % à 60% de 1,1,1,2-tétrafluoroéthane et de 7 % à 20 % de 1,1-difluoroéthane ; ou
- de 13 % à 93 % de 2,3,3,3-tétrafluoropropène, de 5 % à 60 % de 1,1,1,2-tétrafluoroéthane et de 2 % à 30 % de 1,1-difluoroéthane, de préférence de 25 % à 92 % de 2,3,3,3-tétrafluoropropène, de 5 % à 60% de 1,1,1,2-tétrafluoroéthane et de 3 % à 15 % de 1,1-difluoroéthane ; ou
- de 10 % à 75 % de 2,3,3,3-tétrafluoropropène, de 5 % à 60 % de 1,1,1,2-tétrafluoroéthane et de 20 % à 80 % de 3,3,3-trifluoropropène, de préférence de 10 % à 65 % de 2,3,3,3-tétrafluoropropène, de 5 % à 50% de 1,1,1,2-tétrafluoroéthane et de 30 % à 80 % de 3,3,3-trifluoropropène ; ou
- de 10 % à 85 % de 2,3,3,3-tétrafluoropropène, de 5 % à 60 % de 1,1,1,2-tétrafluoroéthane et de 10 % à 70 % de 3,3,3-trifluoropropène, de préférence de 10 % à 60 % de 2,3,3,3-tétrafluoropropène, de 5 % à 50% de 1,1,1,2-tétrafluoroéthane et de 20 % à 60 % de 3,3,3-trifluoropropène ; ou
- de 15 % à 67 % de 2,3,3,3-tétrafluoropropène, de 3 % à 10% de 1,1-difluoroéthane et de 30 % à 70 % de 3,3,3-trifluoropropène, de préférence de 21 % à 57 % de 2,3,3,3-tétrafluoropropène, de 3 % à 9 % de 1,1-difluoroéthane et de 40 % à 70 % de 3,3,3-trifluoropropène ; ou
- de 35 % à 89 % de 2,3,3,3-tétrafluoropropène, de 3 % à 15 % de 1,1-difluoroéthane et de 8 % à 50 % de 3,3,3-trifluoropropène, de préférence de 50 % à 85 % de 2,3,3,3-tétrafluoropropène, de 5 % à 10 % de 1,1-difluoroéthane et de 10 % à 40 % de 3,3,3-trifluoropropène ; ou
- de 15 % à 50 % de 1,3,3,3-tétrafluoropropène, de 35 % à 82 % de 1,1,1,2-tétrafluoroéthane et de 3 % à 15 % de 1,1-difluoroéthane, de préférence de 20 % à 30 % de 1,3,3,3-tétrafluoropropène, de 60 % à 75 % de 1,1,1,2-tétrafluoroéthane et de 5 % à 10 % de 1,1-difluoroéthane ; ou
- de 10 % à 40 % de 1,3,3,3-tétrafluoropropène, de 45 % à 87 % de 1,1,1,2-tétratluoroéthane et de 3 % à 15 % de 1,1-difluoroéthane, de préférence de 10 % à 30 % de 1,3,3,3-tétrafluoropropène, de 60 % à 85 % de 1,1,1,2-tétrafluoroéthane et de 5 % à 10 % de 1,1-difluoroéthane ; ou
- de 35 % à 72 % de 1,3,3,3-tétrafluoropropène, de 3 % à 15 % de 1,1-difluoroéthane et de 25 % à 50 % de 3,3,3-trifluoropropène, de préférence de 40 % à 66 % de 1,3,3,3-tétrafluoropropène, de 4 % à 10 % de 1,1-difluoroéthane et de 30 % à 50 % de 3,3,3-trifluoropropène ; ou
- de 35 % à 82 % de 1,3,3,3-tétrafluoropropène, de 3 % à 15 % de 1,1-difluoroéthane et de 15 % à 50 % de 3,3,3-trifluoropropène, de préférence de 40 % à 75 % de 1,3,3,3-tétrafluoropropène, de 5 % à 10 % de 1,1-difluoroéthane et de 20 % à 50 % de 3,3,3-trifluoropropène.
